# EUROPEAN PATENT APPLICATION

(11) **EP 2 803 499 A1**
(43) Date of publication of application: **19.11.2014**
(21) Application number: 14167800.3
(22) Date of filing: 09.05.2014
(51) Int. Cl.: B60B 29/00

(54) **Machine for the movement of wheels of vehicles or the like**

(30) Priority: 14.05.2013 IT MO20130128
(71) Applicant: Copelli, Imer, 41030 Novi di Modena (MO) (IT); Gatti, Sauro, 41030 Novi di Modena (IT)
(72) Inventor: Copelli, Imer, 41030 Novi di Modena (MO) (IT); Gatti, Sauro, 41030 Novi di Modena (MO) (IT)
(74) Representative: Luppi, Emanuele

(57) **Abstract**

The machine (1) for the movement of wheels of vehicles or the like, comprises a bearing structure (2), movement means (3) of the bearing structure (2) on a reference plane (P), supporting means (4) of at least a wheel (R) of a vehicle which move along at least a first substantially vertical direction (5) for lifting/lowering the wheel (R) with respect to the reference plane (P) and along at least a second direction (6) transversal to the first direction (5) for moving close/away the wheel (R) to/from a reference vehicle on which the wheel itself is intended to be fitted, and wherein the supporting means (4) comprise means for keeping (8) the wheel (R) in a substantially vertical position.

## Description

The present invention relates to a machine for the movement of wheels of vehicles or the like.

In the field of motor vehicles it is known to perform maintenance jobs generally involving the removal and subsequent repositioning of their wheels.

This can occur, for example, when balancing a wheel or replacing its tire.

The positioning of a wheel on a balancing machine is generally quite easy, also thanks to the use of machines that allow to move the wheel, once the same has been removed from its vehicle, bringing it automatically in correspondence of the shaft of the balancing machine.

The more difficult job is that of repositioning the balanced wheel on the vehicle. This is due to the fact that to date there are no machines capable of moving a wheel so as to allow its positioning on the hub of the relevant vehicle without requiring the manual job of one or more operators.

The machines generally used today for the movement of materials are the type of transpallet or forklift trucks which, given their specific conformation, are not adapted to carry out the above mentioned operations.

In particular, this type of devices comprises a bearing structure and supporting means for the material to be moved, such as the forks of the forklift truck, which are movable with respect to the bearing structure itself both in vertical and horizontal direction.

Such supporting means are however not able to move a wheel and to keep it at the same time in the proper position to allow its fixing on the relevant vehicle.

It must also be considered that besides moving the wheel so that its axis coincides with that of the relevant hub, the wheel itself must also be supported during the step of making integral, the latter being performed by an operator through the application of appropriate fixing means.

As it can be easily understood, this procedure is impracticable with the tools known today which, given their conformation, do not allow an operator to access, in use, to the item delivered.

The main aim of the present invention is to provide a machine for the movement of wheels of vehicles or the like which allows to position a wheel on its wheel hub in an easy and effective manner without the need to perform any manual shift of the same.

Within this aim, one object of the present invention is to allow the movement of the wheel from a gripping position, in which the wheel is moved away from the relative vehicle, to the final position in which it is applied on the corresponding wheel hub, and at the same time to allow the intervention of an operator to fix the wheel itself.

Another object of the present invention is to provide a machine which allows to position the wheel on the relative supporting means in an easy and safe manner. Another object of the present invention is to provide a machine for the movement of wheels of vehicles or the like which allows to overcome the mentioned drawbacks of the prior art in the ambit of a simple, rational, easy and effective to use as well as low cost solution.

The above mentioned objects are achieved by the present machine for the movement of wheels of vehicles or the like according to claim 1.

Other characteristics and advantages of the present invention will become evident from the description of a preferred but not exclusive embodiment of a machine for the movement of wheels of vehicles or the like, illustrated by way of an indicative, but not limitative, example in the accompanying drawings in which:

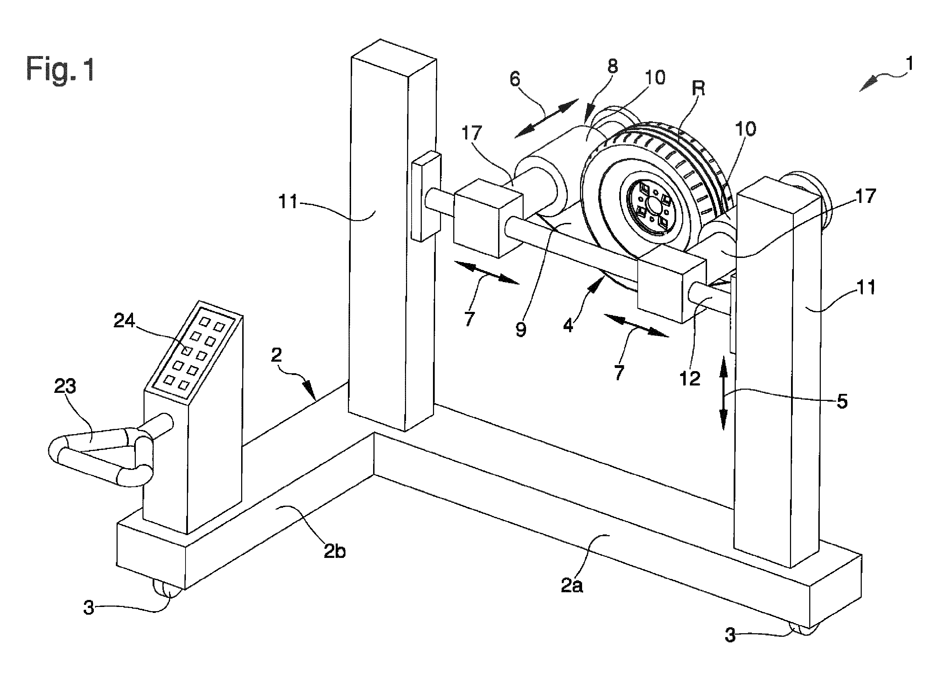

Figure 1 is an axonometric view of a machine according to the invention in a first embodiment;

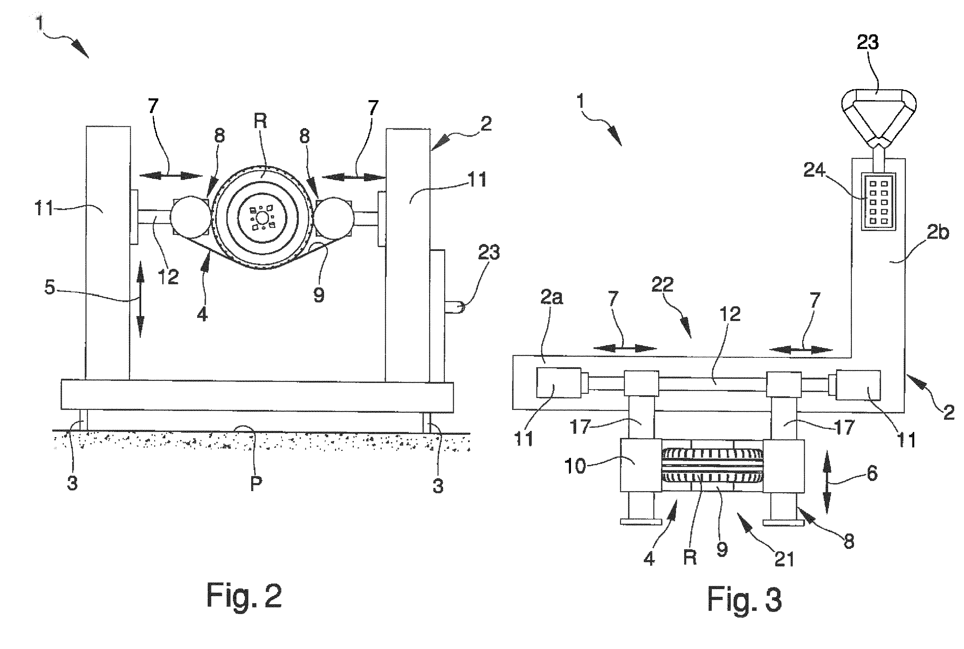

Figure 2 is a front elevation view of the machine of Figure 1;
Figure 3 is a top plan view of the machine of Figure 1;
Figure 4 is a front elevation view of the machine of Figure 1 in which the means for shifting the supporting means are schematically represented;
Figure 5 is a schematic representation of the supporting means of the wheel of the machine of Figure 1, with the wheel positioning means lifted with respect to a reference plane;
Figure 6 is a representation of the supporting means of Figure 5 with the wheel positioning means resting on the reference plane;

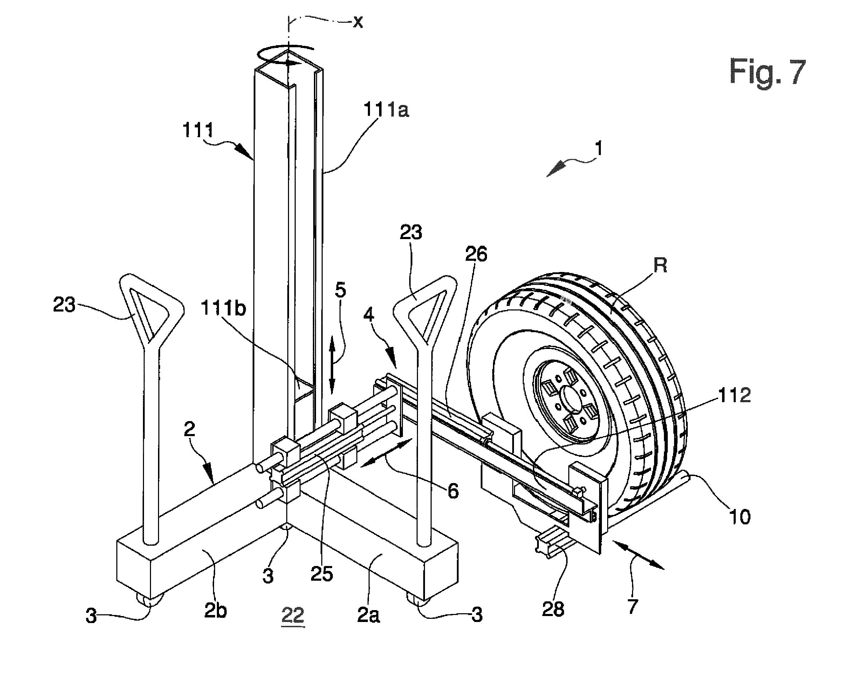

Figure 7 is an axonometric view of a machine according to the invention in a second embodiment;

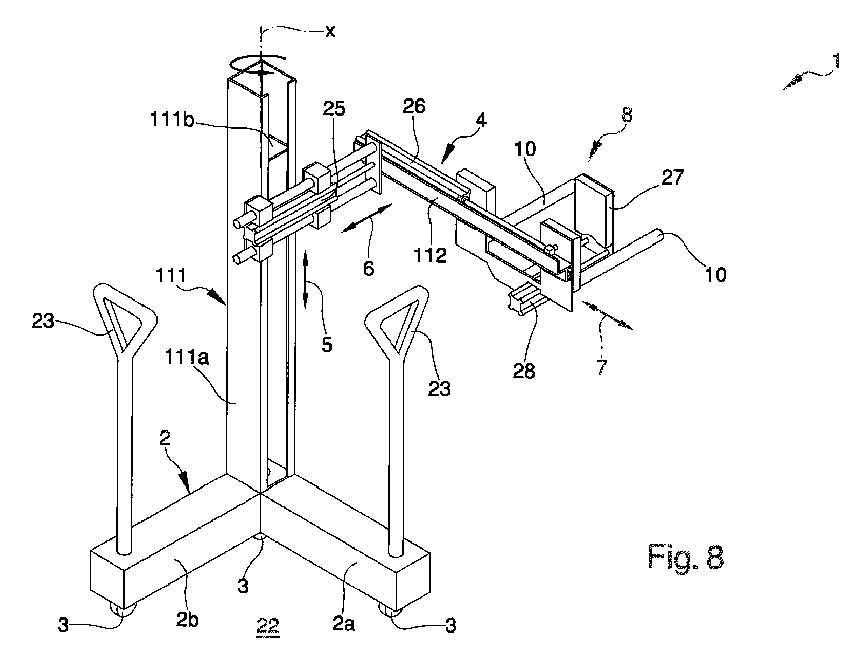

Figure 8 is an axonometric view of the machine of Figure 7 with the supporting means lifted;

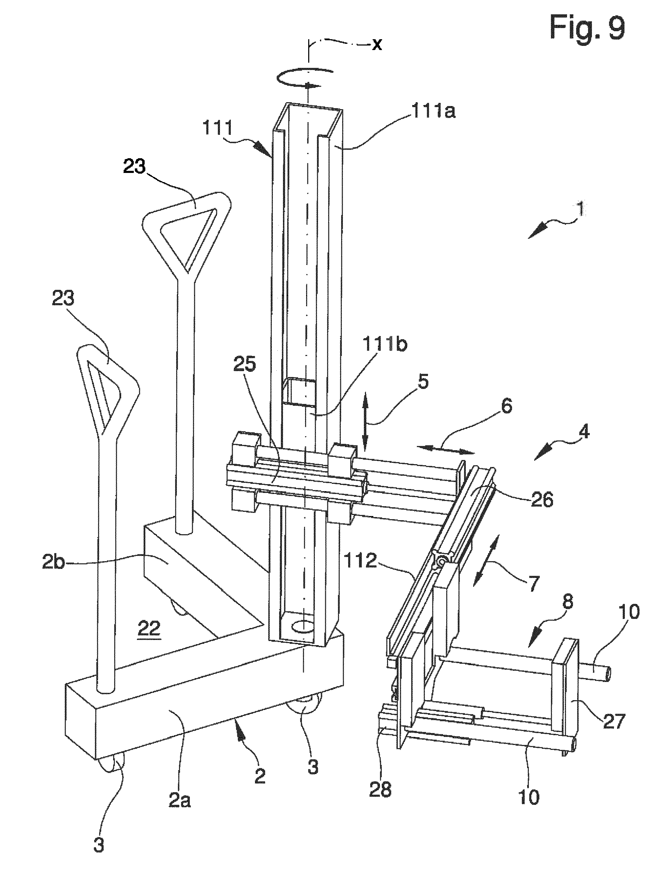

Figure 9 is an axonometric view of the machine of Figure 7 with the supporting means rotated with respect to the bearing structure.

With particular reference to these figures, globally indicated by reference number 1 is a machine for the movement of wheels of vehicles or the like.

The machine 1 comprises a bearing structure 2, movement means 3 of the bearing structure 2 with respect to a reference plane P, such as the ground, and supporting means 4 of at least a wheel R connected to the bearing structure itself.

The movement means 3 are constituted e.g. by a plurality of wheels, at least one of which is directionally released with respect to the reference plane P.

The supporting means 4 may move along at least a first substantially vertical direction for lifting and lowering the wheel R with respect to the reference plane P and along at least a second direction transversal to the first direction for moving the wheel itself close/away to/from a reference vehicle (not shown in the figures) on which the wheel R is intended to be placed/removed. In the illustrations, the first and the second directions are represented by the double arrows identified, respectively, with the reference numbers 5 and 6.

According to the invention, the supporting means 4 comprise means for keeping 8 the wheel R in a substantially vertical position.

With the term "vertical position" referred to the wheel R is meant the position in which the axis thereof is parallel to the reference plane P.

Advantageously, the supporting means 4 comprise at least a resting surface 9 intended to support the weight of the wheel R.

More in particular, the resting surface 9 may be rigid or flexible. Preferably, the resting surface 9 is shaped so as to define a saddle for housing the wheel R.

The means for keeping 8 the wheel R in vertical position comprise at least a pair of locator elements 10 associated with the resting surface 9 and intended to be arranged on opposite sides of the wheel itself. The locator elements 10 define relative locator surfaces arranged at a higher height than the resting surface 9, where such locator surfaces are adapted to contact laterally a portion of the wheel R.

In the first embodiment shown in the illustrations, the resting surface 9 is integrally associated with the locator elements 10, i.e. it moves integrally with the latter along their shifting directions.

More in detail, the locator elements 10 are constituted by respective circular elements that may contact the wheel directly or, in an alternative embodiment, by means of the interposition of a coating element (not shown in the figures) wrapped around the same and which also defines the resting surface 9.

In the first embodiment shown in the illustrations, the bearing structure 2 has a pair of supporting posts 11 extending vertically and between which the supporting means 4 are interposed.

More in detail, the supporting means 4 are connected in translation along the first direction 5 to the supporting posts 11 by means of an upright 12.

The supporting means 4 are therefore interconnected to the upright 12 which in turn is placed between the supporting posts 11 and connected movable in translation to the latter along the first direction 5.

Advantageously, the machine 1 comprises motor-driven shift means 13 of the supporting means 4 along the first direction 5.

More particularly, the shift means 13 comprise at least a belt-shaped element 14 which cooperates with a plurality of rollers 15 and which is associated with motor means 16, e.g. of the electric type, adapted to move it. Suitably, the shift means 13 are positioned within the bearing structure 2.

In the particular embodiment shown in the illustrations, the belt-shaped element 14 has two pairs of sections 14a which are arranged substantially (since the actual inclination of each section depends on the position of the rollers 15 with which each section cooperates) vertical and where each pair is housed inside a relative supporting post 11. Between the sections 14a of each pair is placed a relative roller 15. The two pairs of sections 14a of the belt-shaped element 14 are therefore arranged on opposite sides of the supporting means 4, the latter being connected on one side to the closest section 14a of one of the pairs of sections and on the opposite side to the farthest section 14a of the other pair of sections. This is due to the fact that the sections 14a to which the supporting means 4 are mechanically connected have, as it can be easily understood, to move in the same direction.

More in detail, the upright 12 is connected to the sections 14a in the above mentioned manner through interconnection means, schematically shown in the illustrations, such as pliers or the like.

Alternative embodiments of the shift means 13 cannot be ruled out such as, e.g., fluid-dynamic cylinders, a chain driven by sprockets or other solutions known to the technician of the field.

Advantageously, the supporting means 4 are movable with respect to the bearing structure 2 also along at least a third direction transversal to the first and second directions 5 and 6 and in turn identified in the figures by the double arrow 7.

Directions 5, 6 and 7 are suitably arranged perpendicular to each other, where the first direction 5 is substantially vertical while the second and the third directions 6 and 7 are substantially horizontal.

Preferably, the locator elements 10 are movable in the direction of reciprocal moving close/away to allow their adaptation to wheels R having different dimensions. The direction of reciprocal moving close/away of the locator elements 10 coincides with the third direction 7. In this embodiment means for tensioning the resting surface 9 are suitably provided, not visible in detail in the illustrations, which are adapted to adjust the extension of the resting surface itself (meant as its length measured between the extremities associated with the locator elements 10) depending on the reciprocal distance of the locator elements themselves.

More in detail, the locator elements 10 are fitted sliding along the second direction 6 on respective guide elements 17 which are in turn associated sliding along the third direction 7 with the upright 12 so as to allow the shift of the locator elements 10 along the third direction itself as well as their reciprocal moving close/away. The guide elements 17 are therefore released in translation from one another along the third direction 7.

Suitably, the supporting means 4 are manually movable along the second and third directions 6 and 7.

In the second embodiment shown in Figures from 7 to 9, the supporting means 4 are also movable in rotation with respect to the bearing structure 2 around a substantially vertical axis and identified with letter X. The axis X is therefore arranged substantially parallel to the first direction 5. The rotation of the supporting means 4 around the axis X is adapted to allow the use of machine 1, and therefore the movement of a wheel R, even in the case of the bearing structure 2 not being correctly positioned with respect to the relative vehicle without it being necessary, however, to move the bearing structure itself. Advantageously, the machine 1 comprises a supporting post 111 associated movable in rotation with the bearing structure 2 around the axis X and with which the supporting means 4 are integrally associated in rotation.

In this second embodiment, the movement means 3 of the machine 1 comprise at least a wheel directionally released with respect to the reference plane P and integral in rotation with the supporting post 111.

Preferably, the supporting means 4 are associated overhanging with the supporting post 111.

More in detail, the supporting means 4 are associated with an upright 112 supported overhanging by the supporting post 111 and associated sliding with the vertical post itself along the first and second directions 5 and 6.

In the embodiment represented in figures from 7 to 9, the supporting post 111 comprises a first portion 111a and a second portion 111b, where the latter supports the upright 112 and slides along the first direction 5 within the first portion 111a, which therefore acts as a guide.

The machine 1 therefore has a first fluid-dynamic cylinder (not visible in the figures) adapted to move the upright 112 along the first direction 5. The first fluid-dynamic cylinder is integral in rotation to the supporting post 111 around the axis X and its stem is mechanically connected to the upright 112.

The machine 1 has, then, a second fluid-dynamic cylinder 25 adapted to move the upright 112 along the second direction 6. The second fluid-dynamic cylinder 25 is integral in rotation to the supporting post 111 around the axis X and in translation to the first fluid-dynamic cylinder above.

The upright 112 also supports a third fluid-dynamic cylinder 26 adapted to move the locator elements 10 in the direction of reciprocal moving close/away. More particularly, the third fluid-dynamic cylinder 26 has the body integrally associated with the upright 112 and the relative stem associated with one of the two locator elements 10.

In this second embodiment, the supporting means 4 also comprise at least a containment element 27 of the wheel R, which is movable along a direction parallel to the second direction 6 close to/away from the wheel itself.

More particularly, a fourth fluid-dynamic cylinder 28 is provided adapted to move the containment element 27 close to/away from the wheel R.

Such containment element 27 is arranged, in use (i.e. with the wheel R arranged on the resting surface 9 and placed between the locator elements 10), on the opposite side of the upright 112 with respect to the wheel R. This containment element 27 therefore acts as an additional safety device to prevent the wheel A from tilting.

Advantageously, the machine 1 comprises positioning means 18 for positioning the wheel R on the resting surface 9.

More particularly, the positioning means 18 comprise at least a coupling element 19 hinged to one of said locator elements 10 and having a free extremity intended to contact, due to its own weight, the reference plane P as a result of the lowering of the supporting means 4. The coupling element 19 defines a coupling plane along which the wheel R is movable to bring it in correspondence of the resting surface 9.

Preferably, the free extremity of the coupling element 19 has a weighed element 20 adapted to ensure that in rest configuration, wherein the free extremity is spaced away from the reference plane P, the same is positioned at a lower height than that of the resting surface 9 due to its own weight and contacts therefore the reference plane P as a result of the lowering of the supporting means 4. Furthermore, in rest configuration the free extremity of the coupling element 19 is vertically staggered outwards with respect to the axis of the locator element 10 with which it is associated, so as to move outwards as a result of the contact with the reference plane P and of the supporting means 4 shifting downwards.

The weighed element 20, which may be wheel-shaped or the like, contacts the reference plane P during the shift of the supporting means 4 downwards, then the weighed element moves on it as a result of the subsequent lowering of the supporting means themselves towards their end-of-stroke bottom position. However, alternative embodiments are not ruled out wherein the weighed element 20 is not present.

The coupling plane defined by the coupling elements 19 therefore modifies its inclination with respect to the reference plane P due to the movement of the supporting means 4 along the first direction 5.

Suitably, the coupling element 19 is of the rigid type.

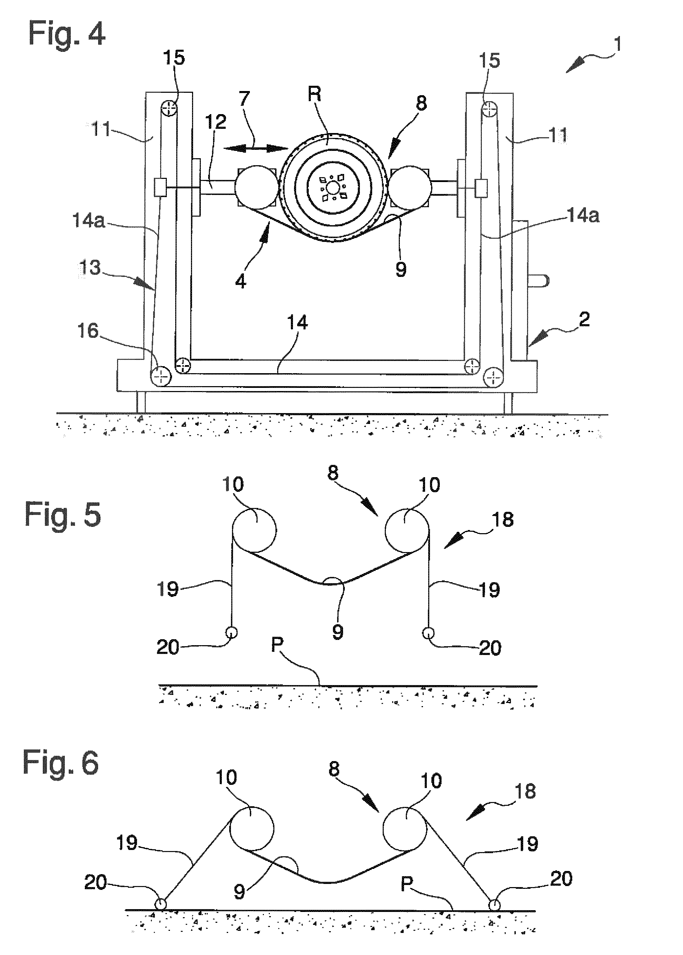

In the embodiment shown in Figures 5 and 6, two coupling elements 19 are provided, each of which is hinged to a respective locator element 10 in such a way as to allow the wheel R to be moved close to the resting surface 9 from both sides of the latter.

Figures 5 and 6 show the position taken by the coupling elements 19, and therefore by the relative coupling planes, when the weighed elements 20 are lifted and in contact with the reference plane P, respectively.

Advantageously, the bearing structure 2 delimits a first area 21 turned to the side of the vehicle on which the wheel R is to be applied and inside which protrude the supporting means 4 and a second area 22 for the access to the supporting means themselves which is arranged on the opposite side of the first area 21. The shape of the bearing structure 2 is therefore such as to allow the access to the supporting means 4 by an operator on the opposite side with respect to the vehicle on which the wheel R has to be mounted, so as to allow the fixing thereof to the relative wheel hub.

The front area and the rear area of the supporting means 4 along the second direction 6 are therefore free, i.e. devoid of obstacles or barriers, to allow the access to the wheel hub and the access to the wheel R by an operator, respectively.

In the preferred embodiments shown in the illustrations, the bearing structure 2 is substantially L-shaped, i.e. it comprises a first side 2a, to which the supporting means 4 are connected, and a second side 2b that extends in a direction substantially perpendicular to the first side 2a on the opposite side of the supporting means 4. The first and second sides 2a and 2b delimit, therefore, the second area 22.

The machine 1 then comprises gripping means 23 and control means 24. In the first embodiment shown in Figures from 1 to 4, the gripping means 23 and the control means 24 are associated with the second side 2b.

In the second embodiment shown in Figures from 7 to 9, on the other hand, two gripping means 23 are provided, arranged at the free extremities of sides 2a and 2b, and the control means are associated with the supporting post 111.

More in detail, the gripping means 23 may be gripped by an operator to manually shift the machine 1 by means of the movement means 3.

The control means 24 comprise, e.g., a keyboard usable by an operator to activate/deactivate some functions of the machine 1. The keyboard 24 can e.g. be used to control the shift of the supporting means 4 along at least the first direction 5.

The operation of the present invention is as follows.

In particular, the operation is described below of the machine 1 to position a wheel R, for example at the end of the balancing procedure, on the corresponding vehicle.

The wheel R is therefore initially arranged resting on the ground P.

To position the wheel on the resting surface 9 the supporting means 4 need to be moved downwards. This shift is made by operating, e.g. by means of the keyboard 24, the motor means 16 which move the belt-shaped element 14 in the first embodiment or the first fluid-dynamic cylinder in the second embodiment. More in particular, the motor means 16 are operated in such a way that the sections 14a of the belt-shaped element 14 to which the upright 12 is connected move downwards, so that the guide elements 17 are also moved close to the ground P.

During the shift downwards of the supporting means 4, the free extremity of the coupling elements 19 contacts the ground P and the coupling plane defined by the same begins to reduce its inclination with respect to the ground.

When the upright 12, 112 reaches its end-of-stroke bottom position the wheel R can be made to rotate along one of the coupling planes, which therefore act as a ramp, and bring the wheel in correspondence of the resting surface 9. Before positioning the wheel R on the resting surface 9, the locator elements 10 need to be moved along the third direction 7 depending on the dimensions of the wheel R, in such a way that their reciprocal distance is suitable for keeping the wheel itself in position.

The wheel R is therefore arranged on the resting surface 9 and is placed between the locator elements 10, which keep it in vertical position and prevent any movement thereof.

Once the wheel R is positioned this way, the supporting means 4 are moved so as to align the axis of the wheel itself with that of the relative wheel hub.

First of all the supporting means 4 are shifted, by moving the bearing structure 2 in the first embodiment and/or the supporting post 111 around the axis X in the second embodiment, so that the axis of the wheel R is substantially parallel to that of the relative wheel hub.

Subsequently, the supporting means 4 are moved along the first and the third directions 5 and 7, so as to align the axis of the wheel R with that of the relative wheel hub.

The supporting means 4 can first be moved e.g. along the third direction 7, so that the axis of the wheel R and that of the relative wheel hub substantially belong to the same vertical plane, and then along the first direction 5, in such a way as to bring the wheel R at the same height as the relative wheel hub, to align their relevant axes.

During the shift of the supporting means 4 along the third direction 7 it is appropriate to leave the reciprocal distance of the locator elements 10 unchanged, so as to avoid modifying the position of the wheel R.

The lifting of the supporting means 4 is made by operating the motor means 16 in a direction opposite the previous one in the first embodiment, i.e. so as to move upwards the sections 14a of the belt-shaped element 14 to which the upright 12 is connected, or by means of the first fluid-dynamic cylinder in the second embodiment.

The sequence of shifts of the supporting means 4 may be suitably changed by the operator according to the specific requirements.

During the lifting of the supporting means 4 the free extremities of the coupling elements 19 move from the ground P and, due to their own weight, move to a rest configuration in which they are arranged at a lower height than the resting surface 9.

Afterwards the supporting means 4 are moved along the second direction 6, approaching the vehicle on which the wheel R has to be mounted, until the latter is fitted on the relative wheel hub.

At this point an operator fixes the wheel R to the wheel hub by operating in the area arranged on the opposite side of the vehicle with respect to the supporting means 4.

More particularly, the operator stands in the second area 22, delimited by the bearing structure 2 and arranged behind the supporting means 4, from which area he/she succeeds in accessing to the wheel R and applying the relative fixing means to the wheel hub. During this step the supporting means 4 continue to support the wheel R and keep it in the correct mounting position. Once the fixing operation of the wheel R is completed, the supporting means 4 are removed from wheel R by moving them again along the first and the second directions 5 and 6 in a direction opposite to the previous ones, i.e. away from the vehicle.

It has in practice been found how the described invention achieves the proposed objects and in particular the fact is underlined that, thanks to the presence of the locator elements, once the wheel of a vehicle has been positioned on the machine forming the subject of the present invention, the machine allows moving the wheel itself to the final mounting position without it being necessary to perform any further manual job to correct its position.

Moreover, the absence of obstacles or barriers in the areas in front of and behind the supporting means allows an operator to operate on the wheel while this is arranged on the supporting means themselves, thus facilitating the fixing operations.

Again, the coupling elements allow to facilitate the positioning of the wheel on the resting surface of the machine, thereby reducing the operator's efforts to a minimum.

It follows therefore that the machine forming the subject of the present invention allows to significantly simplify the mounting jobs of a wheel on the relevant vehicle.

## Claims

1. Machine (1) for the movement of wheels of vehicles or the like, comprising a bearing structure (2), movement means (3) of said bearing structure (2) on a reference plane (P), supporting means (4) of at least a wheel (R) of a vehicle which move along at least a first substantially vertical direction (5) for lifting/lowering the wheel (R) with respect to the reference plane (P) and along at least a second direction (6) transversal to said first direction (5) for moving close/away the wheel (R) to/from a reference vehicle on which the wheel itself is intended to be fitted, **characterized in that** said supporting means (4) comprise means for keeping (8) the wheel (R) in a substantially vertical position.

2. Machine (1) according to claim 1, **characterized in that** said supporting means (4) define at least a resting surface (9) of the wheel (R) and **in that** said means for keeping (8) the wheel (R) in a vertical position comprise at least a pair of locator elements (10) associated with said resting surface (9), arranged on opposite sides of the wheel itself and which define relative locator surfaces arranged at a higher height than the resting surface itself.

3. Machine (1) according to claim 2, **characterized in that** said locator elements (10) can be moved in a direction of reciprocal moving close/away.

4. Machine (1) according to one or more of the preceding claims, **characterized in that** said supporting means (4) move in rotation with respect to said bearing structure (2) around a substantially vertical axis.

5. Machine (1) according to claim 4, **characterized in that** it comprises at least a supporting post (111) associated in rotation with said bearing structure (2) around said vertical axis and **in that** said means for keeping (8) the wheel (R) in vertical position are associated overhanging with said supporting post (111).

6. Machine (1) according to claim 5, **characterized in that** said movement means (3) comprise at least a wheel directionally released with respect to the reference plane (P) and integral in rotation with said supporting post (111).

7. Machine (1) according to one or more of the preceding claims, **characterized in that** said supporting means (4) comprise at least a containment element (27) of the wheel (R) arranged on said resting surface (9), where said containment element (27) moves with respect to the resting surface itself along a direction substantially parallel to said second direction (6) and is independent from said means for keeping (8) the wheel (R) in a vertical position.

8. Machine (1) according to one or more of the preceding claims, **characterized in that** it comprises positioning means (18) of the wheel (R) on said resting surface (9).

9. Machine (1) according to claim 8, **characterized in that** said positioning means (18) comprise at least a coupling element (19) hinged to at least one of said locator elements (10) and having a free extremity suitable for resting on the reference plane (P) due to the lowering of said supporting means (4), said coupling element (19) defining a coupling plane along which the wheel (R) can be moved, the inclination of the coupling plane itself with respect to the reference plane (P) changing following the shift of said supporting means (4).

10. Machine (1) according to one or more of the preceding claims, **characterized in that** said bearing structure (2) delimits at least a first area (21), intended to be turned towards the vehicle on which the wheel (R) is intended to be applied and in which said supporting means (4) operate, and at least a second area (22) for the access to the supporting means themselves opposite said first area (21).

11. Machine (1) according to one or more of the preceding claims, **characterized in that** said supporting means (4) can be moved along at least a third direction (7) transversal to said first and second directions (5, 6) for the side movement of the wheel (R) with respect to the vehicle on which the wheel itself is intended to be applied.

12. Machine (1) according to one or more of the preceding claims, **characterized in that** said supporting means (4) can be moved manually along at least said second and third directions (6, 7).

13. Machine (1) according to one or more of the preceding claims, **characterized in that** it comprises motor-driven shift means (13) of said supporting means (4) along at least said first direction (5).

14. Machine (1) according to claim 13, **characterized in that** said motor-driven shift means (13) comprise at least a belt-shaped element (14) cooperating with a plurality of rollers (15) and associated with motor means (16), where said belt-shaped element (14) has at least two pairs of sections (14a) arranged substantially vertical and on opposite sides with respect to said supporting means (4), the latter being connected integral to the distal section (14a) of one of said pairs and to the proximal side (14a) of the other of said pairs.
